# EUROPEAN PATENT APPLICATION

(11) **EP 0 557 880 A1**
(43) Date of publication of application: **01.09.1993**
(21) Application number: 93102469.9
(22) Date of filing: 17.02.1993
(51) Int. Cl.: A01N 25/26, A01N 59/20, A01N 59/16

(54) **An antibacterial porous inorganic capsule and a process for producing the same**

(30) Priority: 17.02.1992 JP 69225/92; 28.10.1992 JP 313967/92
(71) Applicant: Nakamura, Kenji, Osaka (JP)
(72) Inventor: Nakamura, Kenji c/o Nakamura ussan K.K.Awaji Works, Higashiyodogawa-ku,OSAKA (JP); Yanase, Toshiro,c/oNakamura Bussan K.K.Awaji Works, Higashiyodogawa-ku,OSAKA (JP); Mizuguchi, Masaaki,c/o Suzuki Yushi Ind.Co.,Ltd., Ashiya-shi, Hyogo-ken, 659 (JP)
(74) Representative: Brandes, Jürgen, Dr. rer. nat.

(57) **Abstract**

An antibacterial porous inorganic capsule comprises one or more than one antibacterial agents and water-insoluble porous inorganic compound encapsulating the antibacterial agents. The antibacterial agent or agents are selected from antibacterial zeolite, antibacterial zirconium, antibacterial apatite, silver oxide, zinc oxide, zinc sulfide and copper sulfide. The antibacterial powder does not decrease its antibacterial effects when it is mixed with synthetic resin or binder, and the antibacterial powder is free from discoloration due to metal ions.

## Description

### Background of the Invention

### Technical Field of the Invention

The present invention relates to an antibacterial porous inorganic capsule and a process for producing the same. More specifically, the present invention relates to an antibacterial porous inorganic capsule utilizing one or more than one antibacterial agents selected from the group consisting of antibacterial zeolite, antibacterial zirconium, antibacterial apatite, silver oxide, zinc oxide, zinc sulfide and copper sulfide, and a process for producing the same.

### Prior Art

It is known that a silver ion, a zinc ion, a copper ion and the like have an antibacterial property. However, a practically usable antibacterial property cannot be expected by metal of silver since generation of metal ion thereby is scarce. An aqueous solution of silver nitrate has some antibacterial property because of generation of a silver ion, however, such silver nitrate is difficult to actually use because it is water-soluble. When silver nitrate is admixed with coating compounds or plastics, the quantity of flown out silver exceeds the allowable limit. The quantity of silver is restricted to be below 50 ppb in the United States of America and below 100 ppb in Germany. Accordingly, in case of an antibacterial agent which uses silver, the quantity of flown out silver must be minimized so as to be within safety range. Since silver sulfate, zinc sulfate, copper sulfate, copper nitrate, silver perchlorate, zinc perchlorate, copper perchlorate, silver acetate, copper acetate, zinc acetate or the like considerably flows out into water, there is a problem with respect to its safety, and it has a defect that a long lasting antibacterial effect cannot be obtained.

As a material which is water-insoluble and which is so controlled that generation of metal ion is not excessive, antibacterial zeolite, antibacterial zirconium or antibacterial apatite, i.e., a part of or all of ions in zeolite, zirconium or apatite are ion-exchanged with metal, such as silver, zinc, copper or the like, having a antibacterial property, has been developed.

Such agents as antibacterial zeolite have a good antibacterial property against water-mold, high safety of men and a long lasting antibacterial property, and they are expected to be used in various technical fields, such as water treatment. However, since such agents as antibacterial zeolite are powder, the size of which is about 1 to 2 micron meter (in case of synthetic zeolite) or at most about 300 micron meter (in case of natural zeolite), they are very difficult as they are. In other words, they have to be mixed with other materials or bonded to other materials so that they can be easily dealt with upon use. Thus, the powder antibacterial agents have been admixed with synthetic resin such as polyester or polyamide so that they are used in the form of fibers or molded article.

### Problems to Be Solve by the Invention

However, the above-described conventional antibacterial zeolite has a problem that it is discolored by metal ions. When it is mixed with synthetic resin or applied to synthetic resin using binder, there is a defect that it is discolored into dark brown in the course of time, and this tendency becomes more remarkable in presence of moisture, light and absorbed material. Especially, in case of products which are given sanitary conditions by means of antibacterial property, users tend to dislike contamination thereof due to discoloration.

Further, presence of moisture is important for antibacterial agents such as antibacterial zeolite to fully achieve their antibacterial effects. If they are admixed with synthetic resin or binder, there is a serious problem of decrease of antibacterial effect since the synthetic resin shields moisture. Thus, even when the above-described antibacterial zeolite or the like is actually used, antibacterial effects cannot be achieved compared with those which were expected before its actual use.

### Objects of the Invention

The present invention has been achieved taking into consideration the above-described various problems.

It is an object of the present invention to provides improved antibacterial powder which does not decrease its antibacterial effects when it is mixed with synthetic resin or binder and which is free from discoloration due to metal ions.

### Summary of the Invention

According to the present invention, the above-described object is achieved by substantially enclosing antibacterial agent with water-insoluble porous inorganic compound, in other words, encapsulating said antibacterial agent with said water-insoluble porous inorganic compound.

Further, the present invention may use as the antibacterial agent one or more than one among the conventionally known antibacterial zeolite, antibacterial zirconium, antibacterial apatite or the like. In addition, the present invention may use as the antibacterial agent silver oxide, zinc oxide, zinc sulfide or copper sulfide among silver compounds, zinc compounds and copper compounds which have not been used as antibacterial agent.

Silver oxide, zinc oxide, zinc sulfide and copper sulfide are slightly soluble in water, i.e., their solubility in water is about 4x10⁻⁵ to 7x10⁻⁵ moles/liter. More specifically, they are sightly dissolved in presence of moisture and they generate metal ions, and thus achieve antibacterial effects. Since silver oxide and copper sulfide per se are originally colored in dark brown and charcoal gray, if they are admixed with synthetic resin as they are, the original colors appear in the obtained products. Contrary to this, since silver oxide, zinc oxide, zinc sulfide and copper sulfide are encapsulated according to the present invention and converted into white powder, they can be admixed with or used in synthetic resin, synthetic fiber or coating compound without causing any problem of color.

When either one of the following two processes for producing an antibacterial porous inorganic capsule is carried out, the above-described antibacterial agents are surely encapsulated.

### ** First Process, i.e., Interface Reaction Method:

This process comprises:
a first step for suspending at least one antibacterial agent selected from the group consisting of antibacterial zeolite, antibacterial zirconium, antibacterial apatite, silver oxide, zinc oxide, zinc sulfide and copper sulfide, in an aqueous solution of hydroxide of alkaline metal to form slurry;
a second step for admixing said slurry obtained in said first step with an aqueous solution of silicate of alkaline metal;
a third step for making W/O emulsion by mixing dispersion obtained in said second step with an organic solvent having a solubility in water of at most 7 %; and
a fourth step for forming micro-porous particulate matters by admixing and stirring said W/O emulsion obtained in said third step with an aqueous solution of compound which is capable of insolubilizing said alkaline metal silicate.

### ** Second Process, i.e., Hydrolysis Method:

This process comprises:
a first step for dissolving alkoxide M(OR)n, wherein M stands for metallic element, R stands for alkyl group and n stands for atomic number of the metallic element, in a solvent;
a second step for admixing at least one antibacterial agent selected from the group consisting of antibacterial zeolite, antibacterial zirconium, antibacterial apatite, silver oxide, zinc oxide, zinc sulfide and copper sulfide, in a solution obtained in said first step; and
a third step for adding a hydrolytic agent of said alkoxide to dispersion obtained in said second step and allowing them to react with each other.

The "encapsulated" condition according to the present invention means that the water-insoluble porous inorganic compound is deposited around the antibacterial agent, i.e., one or more than one antibacterial agents selected from the group consisting of antibacterial zeolite, antibacterial zirconium, antibacterial apatite, silver oxide, zinc oxide, zinc sulfide and copper sulfide, so that the antibacterial agent is substantially enclosed by capsules made of porous inorganic compound and having a plurality of micro pores.

The pore opening of the plurality of micro pores is about several tens to several hundreds angstrom units and depends on the kind and the concentration of the compound, i.e., the silicate of the alkaline metal, which forms the capsule as well as the kind and the concentration of the insolubilizing agents of the compound. For example, if the concentration of both of them is high, capsules with large diameter are separated out and accordingly, their pore opening becomes large. The pore opening can be varied in the above-described range.

Since micro-porous capsules are formed in accordance with the interface reaction method or the hydrolysis method, moisture is maintained within capsules even after the formed capsules are powdered by filtering, washing and drying. Moisture can freely pass through the membrane of the capsules, and the capsules maintain moisture therein. Thus, the enclosed antibacterial agent continues to generate a small amount of metal ions under the influence of the moisture. Accordingly, when the thus obtained antibacterial agent is admixed with synthetic resin or binder, the antibacterial effects are not decreased.

Silver oxide which is dark brown and copper sulfide which is charcoal gray can be changed by means of encapsulation into white micro-powder which can be admixed with synthetic resin, synthetic fiber or coating compound.

In the meantime, since the antibacterial agents are stored within the capsules, the color of the antibacterial agents do not appear due to the shielding effects of the capsule, and accordingly, the problem of discoloration caused by antibacterial metal can be prevented from occurring. More specifically, when the antibacterial porous inorganic capsule of the present invention used with synthetic resin or the like, the antibacterial effects primarily caused by the antibacterial agents are not deteriorated, and ionization is facilitated since appropriate amount of moisture is maintained in the capsules as described above. Further, contamination due to discoloration which may be caused by antibacterial agents can be fully prevented from occurring.

In the interface reaction method, as a pretreatment of encapsulation, the antibacterial agents are added in an aqueous solution of hydroxide of alkaline metal to form slurry, and thus the dispersion properties of the antibacterial agents in the aqueous solution of silicate of alkaline metal are upgraded, and finally, the antibacterial agents are encapsulated by porous inorganic compounds.

Further, by means of a simple method wherein hydrolysis reaction of alkoxide is carried out while the antibacterial agents exist together, the antibacterial agents can be encapsulated, without loosing the primary antibacterial property of the antibacterial agents, by porous inorganic compound which are created during the hydrolysis reaction.

The first method, i.e., the interface reaction method, is effective for obtaining porous capsules having large pore openings in their porous material, and the second method, i.e., the hydrolysis reaction method, is effective for obtaining porous capsules having small thickness in membrane of the encapsulating layer.

### Detailed Description of the Invention

The present invention will now be explained specifically in detail.

According to the first step of the first method, i.e., the interface reaction method, one or more than one antibacterial agents, which are selected from the group consisting of antibacterial zeolite, antibacterial zirconium, antibacterial apatite, silver oxide, zinc oxide, zinc sulfide and copper sulfide, are formed to slurry in an aqueous solution of hydroxide of alkaline metal. Examples of suitable aqueous solution of hydroxide of alkaline metal are an aqueous solution of caustic soda, caustic potash, lithium hydroxide or the like. The concentration of the hydroxide of alkaline metal in the aqueous solution may be 0.1 to 10 %, preferably about 0.2 to 3 %. The antibacterial agents and the aqueous solution of hydroxide of alkaline metal are so prepared that the concentration of the antibacterial agents in the obtained slurry is 20 to 60 wt.%, preferably 50 to 60 wt.%.

Some examples, which are commercially available, of the antibacterial agents which may be used in the present invention are as follows.

### 〈Antibacterial Zeolite〉

"ZEOMIC", the product by Shinanen Zeomic Corporation
"BACTEKILLER", the product by Kanebo, Ltd.

Antibacterial zeolite having a particle size of about 1 micron meter may be used, and preferably the particle size is not more than 1 micron meter.

### 〈Antibacterial Zirconium〉 (which is obtained by absorbing silver to zirconium phosphate by means of ion exchange.)

"NOVARON", the product by TOAGOSEI CHEMICAL INDUSTRY Co. Ltd., powder having particle size of about 0.5 micron meter

### 〈Antibacterial Apatite〉 (which is obtained by absorbing silver to hydrated calcium phosphate by means of ion exchange.)

"APACIDER-A", the product by Kabushiki Kaisha Sangi, powder having a particle size of 1 to 2 micron meter

### 〈Silver Oxide, Zinc Oxide, Zinc Sulfide, and Copper Sulfide〉

Those with particle size not more than 1 micron meter, preferably not more than 0.5 micron meter are used.

Then, in the second step, the slurry is added with stirring to an aqueous solution of silicate of alkaline metal to form dispersion. In this instance, the concentration of the antibacterial agents in the dispersion is adjusted to be about 10 to 50 wt.%.

Silicate of Sodium, Lithium, Potassium may be used for the silicate of alkaline metal. The appropriate quantity of the added silicate is 2 to 6.5 moles/liter calculated as SiO₂.

In the third step, an organic solvent having a solubility in water of at most 7 %, is mixed to the dispersion to make W/O emulsion. The organic solvents which can be used for this step are exemplified as follows.

### 〈Aliphatic Hydrocarbons〉

n-Hexane, isohexane, n-heptane, isoheptane, n-octene, iso-octene, gasoline, petroleum ether, kerosene, benzine, mineral spirit and the like

### 〈Alicyclic Hydrocarbons〉

Cyclopentane, cyclohexane, cyclohexene, cyclononane and the like

### 〈Aromatic Hydrocarbons〉

Benzene, toluene, xylene, ethylbenzene, propylbenzene, cumene, mesitylene, tetralin, styrene and the like

### 〈Ethers〉

Propyl ether, isopropyl ether and the like

### 〈Hydrocarbon Halides〉

Methylene chloride, chloroform, ethylene chloride, trichloroethane, trichloroethylene and the like

### 〈Esters〉

Ethyl acetate, n-propyl acetate, isopropyl acetate, n-butyl acetate, isobutyl acetate, n-amyl acetate, isoamyl acetate, butyl lactate, methyl propionate, ethyl propionate, methyl butyrate and the like
Organic solvent having a solubility in water being at most 7 % may be used in this step for the organic solvent. Should organic solvent having a solubility in water being larger than 7 % be used in this step, even emulsion cannot be obtained, and such an organic solvent is not preferred.

One or more than one organic solvents which have been exemplified above are mixed to the dispersion obtained in the second step to form emulsion. The organic solvents may contain alcohols up to 10 wt.%. The quantity of the organic solvent is not limited as long as the obtained emulsion is of W/O type. The quantity of the organic solvent may be at least 50 wt.% of the emulsion, preferably 70 to 80 wt.%.

The method for making emulsion may be conventionally known one, such as stirring method, or shaking method. Known emulsifying agent may be added upon emulsifying operation. Nonionic surfactants preferably having HLB (hydrophilic-lipophilic balance) of between 3.5 and 6.0 may be used for the emulsifying agent. Examples of preferred nonionic surfactants are as follows.

### 〈Polyoxyethylene sorbitan fatty acid esters〉

Polyoxyethylene sorbitan monolaurate, polyoxyethylene sorbitan monopalmitate, polyoxyethylene sorbitan monostearate, polyoxyethylene sorbitan tristearate, polyoxyethylene sorbitan monooleate

### 〈Polyoxyethylene higher alcohol ethers〉

### 〈Polyoxyethylene fatty acid esters〉

### 〈Glycerin fatty esters〉

### 〈Polyoxyethylene sorbitol fatty acid esters〉

The quantity of the emulsifying agent may be at most 10 wt.%, preferably, between 0.01 and 3 wt.%, of the organic solvent.

Thereafter, in the fourth step, the W/O emulsion obtained in the third step is admixed with an aqueous solution of compound which is capable of insolubilizing the silicate of alkaline metal and is stirred for 20 to 30 minutes to react with each other. This reaction is to react in the emulsion the aqueous solution containing the antibacterial agent and the silicate of alkaline metal with the aqueous solution containing the compound which is capable of insolubilizing the silicate of alkaline metal, and this reaction is a kind of interface reaction. The reaction takes place around the antibacterial agents, and insolubilized inorganic compounds separate out around the antibacterial agents, and porous inorganic capsules are formed.

The aqueous solution containing the compound which is capable of insolubilizing the silicate of alkaline metal may be sodium bicarbonate, potassium bicarbonate, ammonium bicarbonate, calcium chloride, magnesium chloride, barium chloride or the like.

Then, the materials wherein the inorganic compounds separating out around the antibacterial agents are filtered, washed and dried in accordance with the normal methods.

The particulars of the body of the capsule , i.e., the receptacle portion of the porous inorganic capsule of the present invention, obtained by means of the first method, i.e., the interface reaction method, are as follows.
(a) Particle Size 0.05 to 300 micron meter
(b) Thickness of the Membrane of the Capsule 0.02 to 10 micron meter
(c) Degree of Porosity 0.1 to 5 cc/g
(d) Pore Opening in the Membrane of the Capsule 20 to 20000 angstrom unit
Some examples of the porous inorganic compounds which are created in the above-described reaction and which form the porous inorganic capsules of the present invention are as follows.

Silicic acid, magnesium silicate, calcium silicate, barium silicate.

The second process, i.e., the hydrolysis method will now be explained. In the first and second steps, one or more than one antibacterial agents, which are selected from the group consisting of antibacterial zeolite, antibacterial zirconium, antibacterial apatite, silver oxide, zinc oxide, zinc sulfide and copper sulfide, are dissolved in a solution of alkoxide.

It is preferred to use alkoxide designated by M(OR)n, wherein M stands for metallic element, R stands for alkyl group and n stands for atomic number of the metallic element, as the above-described alkoxide.

The metallic element M may be a hydroxide of metal generated by hydrolysis or a metallic oxide obtained by drying the hydroxide, and for example, metal coloring white may be used. More specifically, Al (aluminum), Si (Silicone), Ti (Titan), Zr (Zirconium) and so on are used. The alkyl group designated by R has a carbon number of between 1 and 20, preferably of between 1 and 5, and its preferred examples are methyl, ethyl, propyl (including both n- and iso-), butyl (including both n- and iso-) and so on.

A solvent which can dissolve the alkoxide is used, and its examples are alcohols and aromatic hydrocarbons. More specifically, ethanol, isopropyl alcohol and benzene are exemplified. The concentration of the solvent of the alkoxide is at most 90 %, preferably between about 10 and 30 %. One or more than one antibacterial agents, selected from the group consisting of antibacterial zeolite, antibacterial zirconium, antibacterial apatite, silver oxide, zinc oxide, zinc sulfide and copper sulfide, are so dispersed in the solution that the concentration of the antibacterial agents become between 10 and 80 %. In this instance, a dispersant may be used if necessary.

In the third step, a hydrolytic agent which can hydrolyze the alkoxide is added to the dispersion thus obtained in the second step, and the alkoxide is hydrolyzed. The hydrolytic agent in this instance may be acid or alkali. More specifically, ammonia, sodium hydroxide, hydrochloride acid, acetate acid, sulfuric acid or the like may be used. When acid is used for the hydrolytic agent, the antibacterial agents may be dissolved. Therefore, use of alkali for the hydrolytic agent is more preferred.

In this method, since hydrolysis reaction is used, it is essential for the solution in which the antibacterial agents are dispersed to contain water. The water may be added together with the solvent in the preparing stage of the solvent solution or may be added together with the hydrolytic agent, for example, as ammonia water when ammonia is used. The quantity of the water is satisfactory if hydrolysis takes place and should be at least chemical equivalent.

The added quantity of the hydrolytic agent is between about 0.001 and 0.1 wt.% of the dispersion of the antibacterial agents.

Due to this hydrolysis reaction, inorganic compounds are formed around the antibacterial agents and encapsulate the latter.

Some examples of the combinations of the alkoxide, its solvent and hydrolytic agent are as follows.

When alkoxide is alkoxysilane, it is dissolved in ethanol, i.e., the solvent (the first step), the antibacterial agents are dispersed in this solution (the second step), and ammonia water is added as the hydrolytic agent (the third step). In this case, porous inorganic capsules made of silicic acid are formed around the antibacterial agents.

When alkoxide is tri-isopropyl oxide aluminum, it is dissolved in isopropyl alcohol, i.e., the solvent (the first step), the antibacterial agents are dispersed in this solution (the second step), and hydrochloride acid of about 0.1 N is added as the hydrolytic agent (the third step). Then, porous inorganic capsules wherein alumina encapsulates around the antibacterial agents are obtained.

When alkoxide of Ti is used, capsules of titanium oxide are formed, and alkoxide of Zr is used, capsules of zirconium oxide are formed.

The particulars of the body of the capsule , i.e., the receptacle portion of the porous inorganic capsule of the present invention, obtained by means of the second method, i.e., the hydrolysis reaction method, are as follows.
(a) Particle Size 0.05 to 300 micron meter
(b) Thickness of the Membrane of the Capsule 0.01 to 1 micron meter
(c) Degree of Porosity 0.05 to 1 cc/g
(d) Pore Opening in the Membrane of the Capsule 20 to 100 angstrom unit
Both of the above-described methods can produce the antibacterial porous inorganic capsules of the present invention wherein the inorganic compounds encapsulating around the antibacterial agents. However depending on the producing processes, i.e., the first process using the interface reaction and the second process using the hydrolysis reaction, the shell of the obtained capsules have different properties. For example, they are different in material, porosity, void content and thickness of membrane, and the differences are caused by the differences in the raw materials, the reaction processes, the concentrations of the solutions and the conditions of the emulsion during the capsulizing operation. Thus, the antibacterial properties of the antibacterial porous inorganic capsules of the present invention can be controlled by utilizing these differences. Further, the particle size and the thickness of the membrane of the capsule are also influenced upon by the size of the antibacterial agents which are encapsulated in the capsules.

### Brief Description of the Drawings

Some examples of the antibacterial porous inorganic capsules of the present invention are illustrated in the accompanying drawings, wherein:

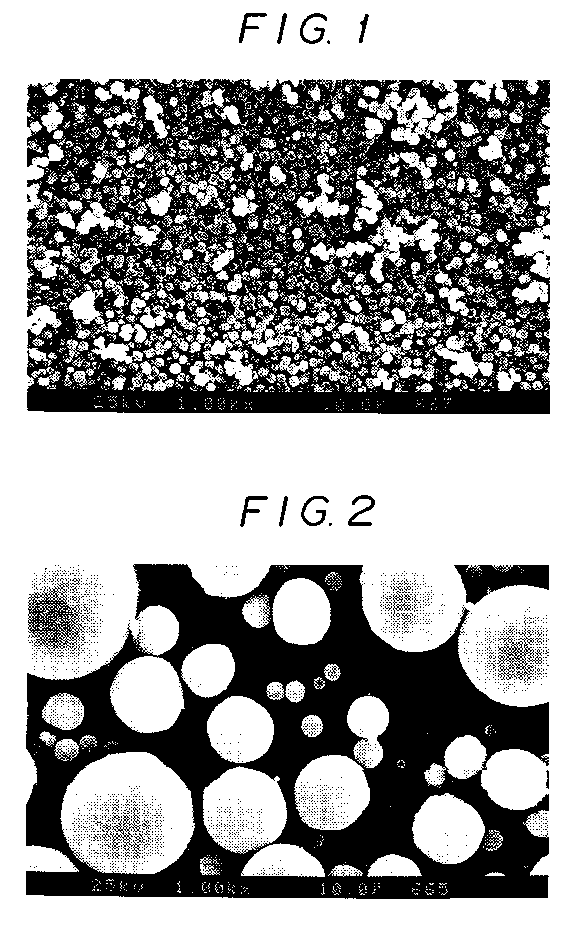

Fig. 1 is a scanning electron photomicrograph (magnification: x3000) of particles of antibacterial zeolite which are before encapsulating process;
Fig. 2 is a scanning electron photomicrograph (magnification: x3000) of antibacterial porous inorganic capsules of the present invention which are obtained by encapsulating the antibacterial zeolite illustrated in Fig. 1 by means of the first process, i.e., interface reaction method, of the present invention;

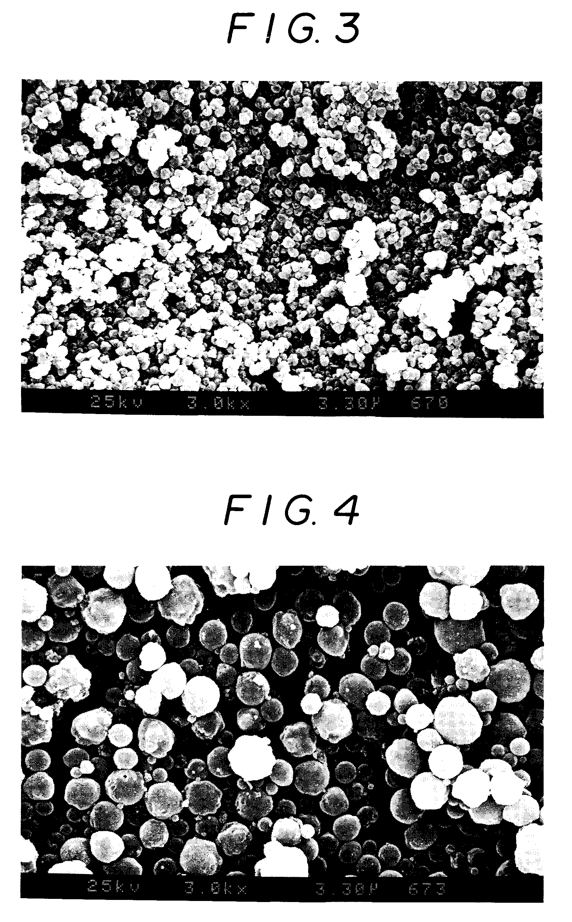

Fig. 3 is a scanning electron photomicrograph (magnification: x3000) of particles of antibacterial zeolite which are before encapsulating process; and
Fig. 4 is a scanning electron photomicrograph (magnification: x3000) of antibacterial porous inorganic capsules of the present invention which are obtained by encapsulating the antibacterial zeolite illustrated in Fig. 3 by means of the second process, i.e., the hydrolysis reaction method, of the present invention.

The antibacterial porous inorganic capsule of the present invention can be widely used in various fields where antibacterial properties are required, for example, in the fields of fibers, papers, plastic products, sheets, vessels and coating compounds.

### Specific Examples

Some specific examples of the present invention will now be described.

### 〈Example 1〉

30 g of antibacterial zeolite was added to an aqueous solution which obtained by dissolving 1 g of caustic soda in 50 g of water to form slurry. Then, the slurry was added with stirring to 180 cc of an aqueous solution of sodium silicate (6.5 moles/liter) to form dispersion. 600 cc of mixture was added to the dispersion. The mixture contained normal-hexane and cyclo-hexane at the mixing ratio of 1:1, and also contained 15 g/liter of polyoxyethylene sorbitan trioleate. Then, the mixture and the dispersion were stirred for 1 minute at 6000 rpm to make W/O emulsion. One liter of ammonium bicarbonate (1.5 moles/liter) was added to the W/O emulsion. They were stirred for 30 minutes at room temperature to react with each other. Then, they were filtered to separate off cake. The case was washed with water, cleaned with ethanol, and dried for 24 hours at 110 ^{o}C. Thus, 100 g of antibacterial porous inorganic capsules enclosing therewith the antibacterial zeolite and having a mean particle size of 20 micron meter were obtained.

The obtained antibacterial porous inorganic capsules were admixed with polyvinyl chloride, the quantity of the capsule being 3 % of the polyvinyl chloride, and then, a sheet having 3 mm thickness was manufactured by said antibacterial polyvinyl chloride. A water storage tank was constructed with the sheet.

The tank was used for storing industrial water, and no contamination due to discoloration nor development of algae or slime was observed after use for 6 months.

Further, when water, the general bacteria level of which was 1.8 x 10⁵ was poured in this storage tank, the bacteria decreased to substantially zero after one day. Thus, it was confirmed that the tank had antibacterial effects.

### 〈Example 2〉

40 g of antibacterial zeolite was added to an aqueous solution which obtained by dissolving 1 g of caustic soda in 50 g of water to form slurry. Then, the slurry was added with stirring to 180 cc of an aqueous solution of sodium silicate (6.5 moles/liter) to form dispersion. 600 cc of cyclo-hexane solution containing 1 % of polyoxyethylene sorbitan tristearate was added to the dispersion, and then, they were stirred by means of a stirrer for 2 minutes at 7500 rpm to make W/O emulsion. One liter of magnesium chloride (2 moles/liter) was added to the W/O emulsion. They were stirred for 40 minutes at room temperature to react with each other. Then, they were filtered to separate off cake, The cake was washed with water, cleaned, and dried for 24 hours at 110 ^{o}C. Thus, 157 g of antibacterial porous inorganic capsules enclosing therewith the antibacterial zeolite and having a mean particle size of 2 micron meter were obtained.

The antibacterial porous inorganic capsules were admixed with polyethylene terephtalate, the quantity of the capsule being 1 % of the polyethylene terephtalate, and then, staple fibers of 3 denier were manufactured by the mixture thus obtained. The obtained staple fibers were free from discoloration by metallic ion. The thus obtained polyester staple fibers were blended with cotton by 30 %, and then, sheeting was woven from spun yarn of the blended fibers.

When general bacteria, the level of which was 1.8 x 10⁵, were inoculated on this sheeting, the level of the bacteria decreased to less than 1 x 10² after one day. Thus, it was confirmed that the sheeting had antibacterial effects. The sheeting was used as a dishcloth, there occurred no contamination due to discoloration by metallic ion after use for 6 months.

### 〈Example 3〉

117 milliliter of ethanol was added and dissolved to 204 g of tetraethoxysilane, Si(OC₂H₅)₄, and 60 g of antibacterial zeolite was added to the solution and dispersed therein. Then, after adding 90 milliliter of 0.1 N ammonia water t the solution, the solution was stirred for 10 minutes by means of an ultrasonic dispersion mixer, and was heated at 60 ^{o}C for 3 hours. Then, the solution was filtered to separate off cake. The cake was dried at 110 ^{o}C for 24 hours, and thus 120 g of antibacterial porous inorganic capsules having a mean particle size of 8 micron meter were obtained.

The antibacterial porous inorganic capsules were admixed with polyethylene, the quantity of the capsule being 6 % of the latter, and then, a sheet was made of the thus obtained mixture. This sheet was free from contamination due to discoloration.

When the sheet was used for wrapping meat, proliferation of general bacteria did not occur after the meat was left to stand at a room temperature for three days.

### 〈Example 4〉

204 g of tri-isopropyl oxide aluminum, Al(OC₃H₇)₃ was dissolved in 150 milliliter of isopropyl alcohol, and 50 g of antibacterial zeolite was added to the solution and dispersed therein by means of an ultrasonic dispersion mixer. Then, after adding 60 milliliter of 0.1 N hydrochloride acid to the solution, the solution was heated at 60 ^{o}C in a temperature controlled bath for 48 hours. Then, the solution was filtered to separate off cake. The cake was dried at 110 ^{o}C for 24 hours, and thus, antibacterial capsules having a mean particle size of 3 micron meter and encapsulated by porous alumina were obtained.

The antibacterial porous inorganic capsules were admixed with polyurethane binder, the quantity of the capsule being 5 % of the latter, and the obtained binder were used to coat the inner sides of a vessel made of stainless steel. After six months from pouring water in the vessel, no contamination due to discoloration occurred. In order to examine the antibacterial effects to the water poured in the vessel, 1.8 x 10⁶ of water mold was inoculated, and the level was lowered to less than 1 x 10² one day after. Accordingly, antibacterial effects were confirmed.

### 〈Example 5〉

50 g of NOVARON AG300 (antibacterial zirconium, the products by TOAGOSEI CHEMICAL INDUSTRY CO., Ltd.) was added to a solution, wherein 204 g of tri-isopropyl oxide aluminum, Al(OC₃H₇)₃ was dissolved in 150 milliliter of isopropyl alcohol, and dispersed therein for 10 minutes by means of an ultrasonic dispersion mixer. Then, after adding 60 milliliter of 0.2 N hydrochloride acid to the solution, the solution was heated at 60 ^{o}C in a temperature controlled bath for 30 hours. Then, the solution was filtered to separate off cake. The cake was washed with water, and dried at 110 ^{o}C for 24 hours, and thus, antibacterial capsules containing antibacterial zirconium, having a mean particle size of 2 micron meter and encapsulated by porous alumina were obtained.

### 〈Example 6〉

10 g of silver oxide, 25 g of zinc oxide and 5 g of copper sulfide were mixed, and were added to a solution, wherein 0.2 g of caustic soda was dissolved in 40 g of water, to form slurry. Then, the slurry was added with stirring to 180 cc of an aqueous solution of sodium silicate (6.5 moles/liter) and was subjected to a treatment by ultrasonic. 600 cc of mixture was added to the dispersion. The mixture contained normal-hexane and cyclo-hexane at the mixing ratio of 1:1 and also contained 15 g/liter of polyoxyethylene sorbitan trioleate. Then, the mixture and dispersion were stirred together for 1 minute at 6000 rpm to make W/O emulsion. One liter of ammonium bicarbonate (1.5 moles/liter) was added to the W/O emulsion. They were stirred for 30 minutes at room temperature to react with each other. Then, they were filtered to separate off cake. The cake was washed with water, cleaned with ethanol, and dried for 24 hours at 110 °C. Thus, 110 g of antibacterial porous inorganic capsules enclosing therewith silver oxide, zinc oxide and copper sulfide at a ratio of 2 : 3 : 1 and having a mean particle size of 0.8 micron meter were manufactured. The powder thus obtained was white.

The antibacterial porous inorganic capsules were admixed with coating compound essentially consisting aqueous acrylic-epoxy resin, the quantity of the capsule being 3 % of the solid in the coating compound, and were stirred. The thus obtained coating compound was coated on a floor covering material made of polyvinyl chloride in such a manner that the coating weight of the antibacterial porous inorganic capsules became 3 g/m².

Methicillin-resistant Staphylococcus aureus (MRSA) was suspended on sterilized broth and was inoculated on the floor covering material made of polyvinyl chloride by 0.2 milliliter. The number of bacteria was about 380000. After it was incubated at a temperature of 37 ^{o}C for 18 hours, it was taken out, and the number of the bacteria remaining on the test piece, i.e., the floor covering material, was measured. The remaining MRSA was zero.

### 〈Example 7〉

60 g of APACIDER- A'' (antibacterial Apatite, the product by Kabushiki Kaisha Sangi) was dispersed in a solution wherein 117 milliliter of ethanol was added and dissolved to 208 g of tetraethoxysilane, Si(OC₂H₅)₄. Then, after adding 90 milliliter of 0.1 N ammonia water to the solution, the solution was dispersed by means of an ultrasonic dispersion mixer, and then, was heated at 60 ^{o}C for 24 hours. After filtering the solution, the thus separated off cake was filtered, washed with water, and dried at 110 ^{o}C for 24 hours, and thus 120 g of antibacterial porous inorganic capsules having particle sizes of between 1 to 2 micron meter were obtained.

4 parts by weight of the antibacterial porous inorganic capsules were dispersed to a solution wherein 93 parts by weight of acetone and 3 parts by weight of cellulose acetate flake were dissolved. The dispersion was coated on a non-woven fabric of rayon, the weight of which was 30 g/m², by means of offset printing in such a manner that the dispersion was 50 wt.% of the rayon non-woven fabric, and the non-woven fabric was dried. The non-woven rayon fabric was cut in a rectangular shape of 15 x 20 cm. Ten pieces of the cut fabric were folded and stacked over each other, and they were contained in a sealed dispenser as wet tissues for wiping use after water was impregnated therein. A kitchen table, on which general bacteria had been detected by a food stamp for bacterial test for detecting general bacteria manufactured by Nissui Pharmaceutical Kabushiki Kaisha, was wiped by the wet tissues, and the bacterial test was again conducted by the food stamp for bacterial test for detecting general bacteria after one hour, and no general bacterial were observed.

### 〈Example 8〉

50 g of ZEOMIC AJ-10N, antibacterial zeolite, the product by Shinanen Zeomic Corporation was added to an aqueous solution which obtained by dissolving 0.5 g of caustic soda in 50 g of water to form slurry. Then, the slurry was added with stirring to 180 cc of sodium silicate (6.5 moles/liter) to form dispersion. 600 cc of mixture was added to the dispersion. The mixture contained normal-hexane and cyclo-hexane at the mixing ratio of 1:1 and also contained 15 g/liter of polyoxyethylene sorbitan trioleate. Then, the dispersion and the mixture were stirred for 1 minute at 6000 rpm to make W/O emulsion. One liter of ammonium bicarbonate (1.5 moles/liter) was added to the W/O emulsion. They were stirred for 30 minutes at room temperature to react with each other. Then, they were filtered to separate off cake. The cake was washed with water, cleaned with ethanol, and dried for 24 hours at 110 ^{o}C. Thus, 90 g of antibacterial porous inorganic capsules enclosing therewith 50 % of the antibacterial zeolite and having a mean particle size of 3 micron meter were obtained.

2 parts by weight of the antibacterial porous inorganic capsules were dispersed into 98 parts by weight of 1.3 % aqueous solution of polyvinyl alcohol, and the dispersion was applied to a cotton ball of a swab in such manner that the quantity of the applied dispersion was 50 wt.% of the cotton ball.

Methicillin-resistant Staphylococcus aureus (MRSA) was cultured for 24 hours using culture medium of meat extract bouillon and was diluted with phosphate buffer to 1/1000. 5 cc of the dilution was added to 70 cc of phosphate buffer so that the plate count per 1 cc was made 6.7 x 10³, and then the cotton ball of the swab was dipped therein, and after cultivation for 6 hours at 25 ± 5 ^{o}C, the liquid with MRSA was taken out and plate count was performed. The result showed the decrease ratio of the bacteria was 96.7 %.

### 〈Example 9〉

120 cc of ethanol was added and dissolved to 200 g of tetraethoxysilane, Si(OC₂H₅)₄, and 40 g of silver oxide was added to the solution and dispersed therein. Then, after adding 90 cc of 0.1 N ammonia water, the solution was stirred for 10 minutes by means of an ultrasonic dispersion mixer, and was heated at 60 ^{o}C for 24 hours. Then, the solution was filtered to separate off cake. The cake was washed and dried at 110 ^{o}C for 24 hours, and thus 120 g of antibacterial porous inorganic capsules enclosing therein the silver oxide and having particle sizes of between 1 to 0.5 micron meter were obtained. The powder thus obtained was white.

The antibacterial porous inorganic capsules were admixed with polyethylene, the quantity of the capsule being 3 % of the latter, and a sheet for wrapping use was manufactured with the polyethylene having the antibacterial porous inorganic capsules admixed therewith. Proliferation of general bacteria did not occur in the meat wrapped by this sheet after the meat was left to stand at a room temperature for four days, and the meat was of safety.

## Claims

1. An antibacterial porous inorganic capsule comprising at least one antibacterial agent selected from the group consisting of antibacterial zeolite, antibacterial zirconium, antibacterial apatite, silver oxide, zinc oxide, zinc sulfide and copper sulfide, and water-insoluble porous inorganic compound encapsulating said antibacterial agent.

2. An antibacterial porous inorganic capsule according to claim 1, wherein said antibacterial agent is antibacterial zeolite.

3. An antibacterial porous inorganic capsule according to claim 1, wherein said antibacterial agent is antibacterial zirconium.

4. An antibacterial porous inorganic capsule according to claim 1, wherein said antibacterial agent is antibacterial apatite.

5. An antibacterial porous inorganic capsule according to claim 1, wherein said antibacterial agent is silver oxide.

6. An antibacterial porous inorganic capsule according to claim 1, wherein said antibacterial agent is zinc oxide.

7. An antibacterial porous inorganic capsule according to claim 1, wherein said antibacterial agent is zinc sulfide.

8. An antibacterial porous inorganic capsule according to claim 1, wherein said antibacterial agent is copper sulfide.

9. An antibacterial porous inorganic capsule according to claim 1, wherein said water-insoluble porous inorganic compound is silicic acid.

10. An antibacterial porous inorganic capsule according to claim 1, wherein said water-insoluble porous inorganic compound is magnesium silicate.

11. An antibacterial porous inorganic capsule according to claim 1, wherein said water-insoluble porous inorganic compound is calcium silicate.

12. An antibacterial porous inorganic capsule according to claim 1, wherein said water-insoluble porous inorganic compound is barium silicate.

13. An antibacterial porous inorganic capsule according to claim 1, wherein said water-insoluble porous inorganic compound is aluminum oxide.

14. An antibacterial porous inorganic capsule according to claim 1, wherein said water-insoluble porous inorganic compound is titanium oxide.

15. An antibacterial porous inorganic capsule according to claim 1, wherein said water-insoluble porous inorganic compound is zirconium oxide.

16. A swab which has said antibacterial porous inorganic capsule according to claim 1 applied thereto.

17. A process for producing an antibacterial porous inorganic capsule comprising:
a first step for suspending at least one antibacterial agent selected from the group consisting of antibacterial zeolite, antibacterial zirconium, antibacterial apatite, silver oxide, zinc oxide, zinc sulfide and copper sulfide, in an aqueous solution of hydroxide of alkaline metal to form slurry;
a second step for admixing said slurry obtained in said first step with an aqueous solution of silicate of alkaline metal;
a third step for making W/O emulsion by mixing dispersion obtained in said second step with an organic solvent having a solubility in water of at most 7 %; and
a fourth step for forming micro-porous particulate matters by admixing and stirring said W/O emulsion obtained in said third step with an aqueous solution of compound which is capable of insolubilizing said alkaline metal silicate.

18. A process for producing an antibacterial porous inorganic capsule comprising:
a first step for dissolving alkoxide M(OR)n, wherein M stands for metallic element, R stands for alkyl group and n stands for atomic number of the metallic element, in a solvent;
a second step for admixing at least one antibacterial agent selected from the group consisting of antibacterial zeolite, antibacterial zirconium, antibacterial apatite, silver oxide, zinc oxide, zinc sulfide and copper sulfide, in a solution obtained in said first step; and
a third step for adding a hydrolytic agent of said alkoxide to dispersion obtained in said second step and allowing them to react with each other.

19. A process for producing an antibacterial porous inorganic capsule according to claim 18, wherein said hydrolytic agent of said alkoxide is alkaline.
